(19) Europäisches Patentamt
European Patent Office
Office européen des brevets

(11) **EP 2 980 529 B1**

(12) **FASCICULE DE BREVET EUROPEEN**

(45) Date de publication et mention de la délivrance du brevet:
**05.04.2017 Bulletin 2017/14**

(51) Int Cl.:
**G01C 3/32** *(2006.01)*    **G02B 13/18** *(2006.01)*

(21) Numéro de dépôt: **15179183.7**

(22) Date de dépôt: **30.07.2015**

(54) **PROCEDE D'ESTIMATION DE LA DISTANCE D'UN OBJET A UN SYSTEME D'IMAGERIE**

SCHÄTZVERFAHREN DES ABSTANDS EINES OBJEKTS ZU EINEM BILDGEBUNGSSYSTEM

METHOD FOR ESTIMATING THE DISTANCE FROM AN OBJECT TO AN IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2014 FR 1457535**

(43) Date de publication de la demande:
**03.02.2016 Bulletin 2016/05**

(73) Titulaire: **Morpho**
**92130 Issy-les-Moulineaux (FR)**

(72) Inventeurs:
• **Maalouf, Aldo**
**92130 ISSY LES MOULINEAUX (FR)**
• **Malek, Mokrane**
**92130 ISSY LES MOULINEAUX (FR)**
• **Picard, Sylvaine**
**92130 ISSY LES MOULINEAUX (FR)**

(74) Mandataire: **Regimbeau**
**20, rue de Chazelles**
**75847 Paris Cedex 17 (FR)**

(56) Documents cités:
• **LEVIN A ET AL: "Image and depth from a conventional camera with a coded aperture", ACM TRANSACTIONS ON GRAPHICS (TOG), ACM, US, vol. 26, no. 3, 1 juillet 2007 (2007-07-01), pages 70-1, XP002622004, ISSN: 0730-0301, DOI: 10.1145/1239451.1239521**
• **YANG LI ET AL: "Simulation of depth from coded aperture cameras with Zemax", PROCEEDINGS OF THE 10TH INTERNATIONAL CONFERENCE ON VIRTUAL REALITY CONTINUUM AND ITS APPLICATIONS IN INDUSTRY, VRCAI '11, 1 janvier 2011 (2011-01-01), page 463, XP055191639, New York, New York, USA DOI: 10.1145/2087756.2087846 ISBN: 978-1-45-031060-4**
• **MAX GROSSE ET AL: "Coded aperture projection", ACM TRANSACTIONS ON GRAPHICS, vol. 29, no. 3, 1 juin 2010 (2010-06-01), pages 1-12, XP055073898, ISSN: 0730-0301, DOI: 10.1145/1805964.1805966**
• **PAULINE TROUVÉ ET AL: "Passive depth estimation using chromatic aberration and a depth from defocus approach", APPLIED OPTICS, OPTICAL SOCIETY OF AMERICA, WASHINGTON, DC; US, vol. 52, no. 29, 10 octobre 2013 (2013-10-10), pages 7152-7164, XP001584965, ISSN: 0003-6935, DOI: 10.1364/AO.52.007152 [extrait le 2013-10-09]**

**Description**

DOMAINE DE L'INVENTION

L'invention concerne un procédé de détermination de la distance d'un objet par rapport à un système d'imagerie.

L'invention est notamment applicable pour améliorer la reconstruction des images d'objets imagés par un système d'imagerie et améliorer la résolution des images obtenues.

ETAT DE LA TECHNIQUE

Un système d'imagerie comprend classiquement un capteur d'images, classiquement un capteur numérique, une ouverture géométrique placée en amont du capteur par rapport aux rayons lumineux, et une unité de traitement des images qui reçoit les signaux générés par le capteur et reconstruit une image d'un objet à partir de ces signaux.

Dans tout système d'imagerie numérique, l'image formée par le système est liée à l'objet par le produit de convolution entre l'image géométrique formée, au sens de l'optique géométrique, par le système d'imagerie, et la réponse impulsionnelle de ce système, c'est-à-dire l'image d'un objet ponctuel par ce système. On appelle cette réponse la fonction d'étalement du point (ou « Point Spread Function » ou encore PSF en anglais).

L'unité de traitement doit mettre en oeuvre une déconvolution de l'image acquise à partir de la fonction d'étalement du point du système d'imagerie pour améliorer la netteté de l'image reconstruite.

La qualité de la déconvolution et la netteté de l'image obtenue après traitement dépendent donc de la capacité du système à déterminer la fonction d'étalement du point optimale du système.

Afin de faciliter la détermination de la fonction d'étalement du point du système d'imagerie, il est connu de modifier le diaphragme d'un système d'imagerie en positionnant en amont du capteur une ouverture codée. Ce type d'ouverture permet de rendre la fonction d'étalement du point du système d'imagerie dépendante de la distance de l'objet par rapport au système.

En particulier, il a été proposé dans l'article de A. Levin et al, Image and Depth from a Conventional Camera with a Coded aperture, l'utilisation d'une géométrie spécifique d'ouverture codée, pour déconvoluer les zones floues d'une mage tout en estimant la distance des objets correspondants à ces zones par rapport au système d'imagerie.

Cette méthode requiert de déconvoluer l'image avec toutes les fonctions d'étalement du point correspondant à différentes distances entre l'objet et le système d'imagerie puis de les convoluer à nouveau pour les comparer avec l'image originale. Elle nécessite donc un temps de calcul important.

PRESENTATION DE L'INVENTION

L'invention a pour but de proposer une méthode de détermination de la distance d'un objet par rapport à un système d'imagerie précise et nécessitant un temps de calcul réduit par rapport à l'art antérieur.

A cet égard, l'invention a pour objet un procédé de détermination d'une distance entre un objet et un système d'imagerie comprenant un capteur d'images, une unité de traitement d'images, et une ouverture géométrique positionnée en amont du capteur par rapport au trajet de la lumière, le procédé étant caractérisé en ce qu'il comprend les étapes consistant à :

- estimer la fonction de transfert de modulation du système d'imagerie à la distance de l'objet par rapport audit système,
- déterminer les fréquences d'aberrations de la fonction de transfert de modulation estimée, et générer un vecteur des fréquences d'aberration,
- mettre en oeuvre une analyse par composantes principales du vecteur, pour déterminer la composante principale du vecteur, et
- à partir de la composante principale obtenue, déterminer une distance de l'objet par rapport au système en fonction d'une distribution jointe de densités de probabilités entre des composantes principales de vecteurs de fréquences d'aberration de systèmes d'imagerie et des distances objet-système, ladite distribution étant obtenue par interpolation entre :

  ◦ des composantes principales de vecteurs de fréquences d'aberration de fonction de transfert de modulation d'un système d'imagerie comprenant une ouverture géométrique pour une pluralité de distances de l'objet par rapport audit système, et
  ◦ chaque distance entre l'objet et le système.

Avantageusement, mais facultativement, le procédé selon l'invention comprend en outre au moins l'une des caractéristiques suivantes :

- le procédé comprend en outre une étape préliminaire d'élaboration de la distribution jointe de densités de probabilités, comprenant les étapes consistant à :

  ◦ pour une pluralité de couples comprenant un système d'imagerie comprenant une ouverture géométrique et une distance d'un objet par rapport au dit système, estimer la fonction de transfert de modulation du système d'imagerie à la distance de l'objet,
  ◦ pour chaque fonction de transfert de modulation estimée pour chacun des couples, déterminer les fréquences d'aberrations du système à la distance de l'objet et générer un vecteur des fréquences d'aberration,

○ mettre en oeuvre une analyse par composantes principales de chaque vecteur des fréquences d'aberration, pour déterminer la composante principale de chaque vecteur, et

○ élaborer la distribution jointe par interpolation entre les composantes principales obtenues et chaque distance entre objet et système d'imagerie.

- l'étape préliminaire d'élaboration de la distribution de densités de probabilités jointe comprend, pour au moins un système d'imagerie, l'estimation d'une fonction de transfert de modulation du système à une pluralité de distances entre l'objet et le système.
- l'étape préliminaire d'élaboration de la distribution de densités de probabilités jointe comprend l'estimation de fonctions de transfert de modulation et la génération de vecteurs de fréquences d'aberrations pour une pluralité de systèmes d'imageries comprenant des ouvertures géométriques différentes.
- l'étape préliminaire d'élaboration de la distribution de densités de probabilités jointe comprend l'estimation de fonctions de transfert de modulation pour des systèmes d'imageries comprenant une ouverture circulaire centrée ou une ouverture codée du type choisi parmi le groupe suivant, et/ou des combinaisons de celles-ci:

  ○ une ouverture carrée,
  ○ une ouverture comprenant un masque annulaire,
  ○ une ouverture comprenant un masque carré,
  ○ une ouverture comprenant un masque périodique.

- la distribution de densité de probabilité jointe est une distribution gaussienne.
- chaque étape de détermination des fréquences d'aberrations d'une fonction de transfert de modulation comprend la détermination des fréquences d'inversion de contraste du système d'imagerie.
- chaque étape de détermination des fréquences d'aberrations d'une fonction de transfert de modulation comprend la détermination des minimas de la fonction.

L'invention a aussi pour objet un procédé de traitement d'une image d'un objet acquise par un système d'imagerie comprenant un capteur d'images, une unité de traitement d'images et une ouverture géométrique, le procédé comprenant :

- l'estimation d'une distance de l'objet par rapport au système d'imagerie par la mise en oeuvre du procédé selon la description qui précède,
- à partir de la distance de l'objet, la sélection d'une fonction d'étalement du point du système d'imagerie, et

- la déconvolution d'une image acquise de l'objet par la fonction d'étalement du système d'imagerie obtenue.

L'invention concerne également un système d'imagerie comprenant un capteur d'images, une unité de traitement d'images et une ouverture géométrique, caractérisé en ce que l'unité de traitement est adaptée pour la mise en oeuvre du procédé de traitement décrit ci-avant.

L'invention a enfin pour objet un produit programme d'ordinateur comprenant des instructions de code pour la mise en oeuvre du procédé de traitement décrit ci-avant lorsqu'il est mis en oeuvre pas des moyens de traitement d'une unité de traitement.

L'invention proposée met en oeuvre la technique de l'analyse par composantes principales des vecteurs correspondant aux fréquences d'aberrations de la fonction de transfert de modulation d'un système d'imagerie pourvu d'une ouverture géométrique.

De façon surprenante, quelle que soit la géométrie de l'ouverture utilisée, l'analyse par composantes principales permet d'élaborer une distribution de densités de probabilités jointes entre la composante principale du vecteur d'aberrations et la distance entre l'objet de le système d'imagerie.

Il en résulte, d'une part, la possibilité de partir une telle distribution, à partir d'un ensemble de systèmes d'imageries dotés de différentes ouvertures géométriques. D'autre part, cette distribution peut servir pour déterminer la distance d'un objet par rapport à un système d'imagerie, quelle que soit l'ouverture associée à ce système.

La détermination de la distance de l'objet par rapport au système est donc de mise en oeuvre plus rapide et moins coûteuse en ressources de calcul que dans l'art antérieur, puisqu'en particulier il suffit de charger une distribution pré-établie de densités de probabilités, et qu'il n'est pas nécessaire de tester plusieurs fonctions d'étalement du point pour trouver la fonction optimale.

DESCRIPTION DES DESSINS

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un système d'imagerie comprenant une ouverture géométrique,
- La figure 2 représente un exemple de fonction de transfert de modulation d'un système d'imagerie à différentes distances d'un objet par rapport au système,
- Les figures 3a à 3g illustrent différentes géométries d'ouvertures utilisées pour l'élaboration d'une distribution de densité de probabilités jointe entre des composantes principales de vecteurs de fréquences d'aberration de la fonction de transfert de modulation d'un système et la distance d'un objet par rapport au système.

- La figure 4 représente la distribution de densité de probabilités obtenue,
- Les figures 5a et 5b représentent schématiquement les différentes étapes du procédé de détermination de la distance d'un objet par rapport à un système d'imagerie selon un mode de réalisation de l'invention.

## DESCRIPTION DETAILLEE D'AU MOINS UN MODE DE REALISATION DE L'INVENTION

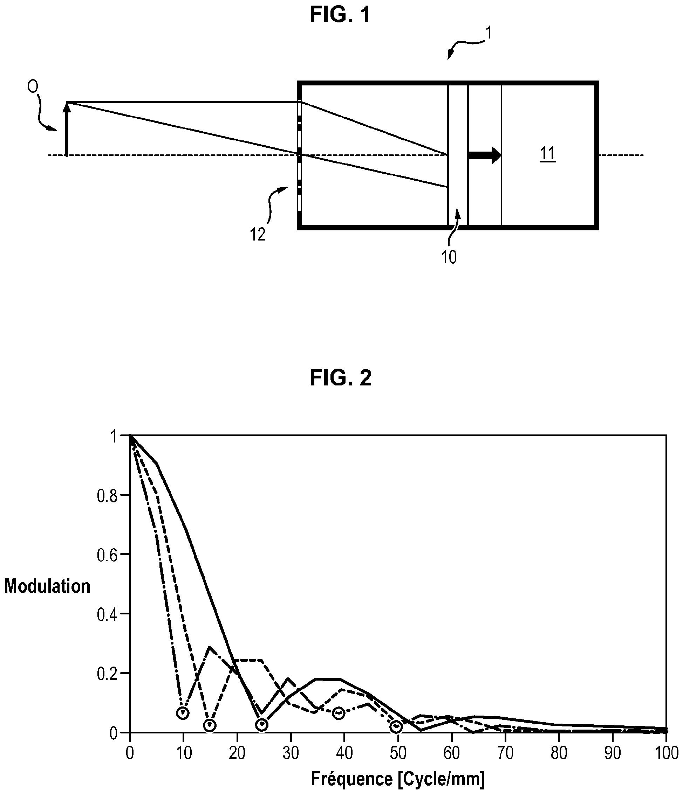

En référence à la figure 1, on a représenté schématiquement un système d'imagerie 1. Le système d'imagerie peut être un appareil photographique numérique ou une caméra numérique. Il comprend un capteur d'images 10 numérique, et une unité 11 de traitement des images, adaptée pour traiter les signaux générés par le capteur 10 pour reconstruire une image, à partir de ces signaux, d'un objet O.

En amont du capteur 10 par rapport au trajet de la lumière, le système comprend en outre une ouverture 12, ou diaphragme. Cette ouverture ne laisse passer vers le capteur qu'une partie de la lumière incidente.

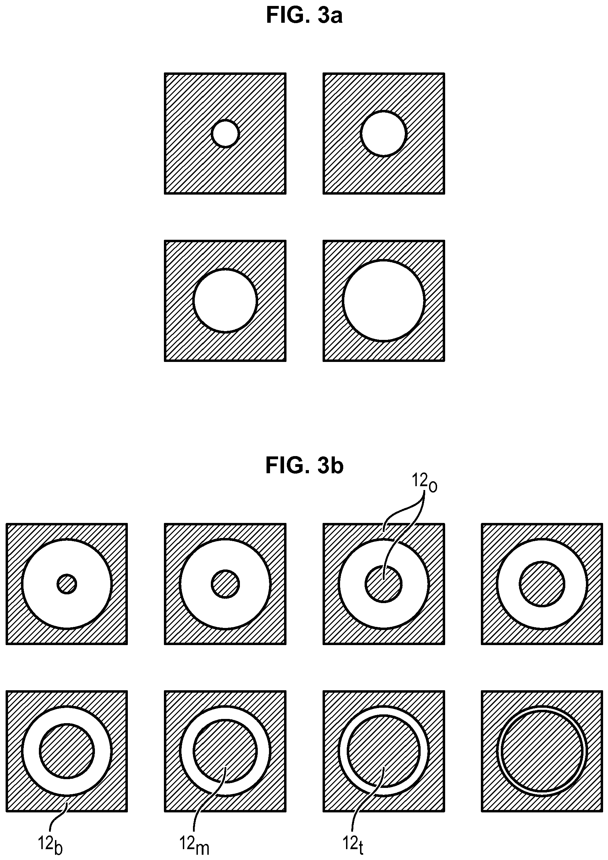

Il peut s'agir d'une ouverture circulaire centrée classique ou d'une ouverture codée, c'est-à-dire toute ouverture autre qu'un trou centré et circulaire, et en particulier, mais non limitativement, toute ouverture de diaphragme consistant en plusieurs trous. Elle peut à cet égard comprendre une bordure périphérique $12_b$ qui détermine un contour de l'ouverture, et/ou un masque $12_m$ opaque, disposé dans l'ouverture, et obturant certaines zones de celle-ci. Dans tous les cas, l'ouverture définit des zones transparentes $12_t$ et des zones opaques $12_o$ aux rayons lumineux (voir figure 3b).

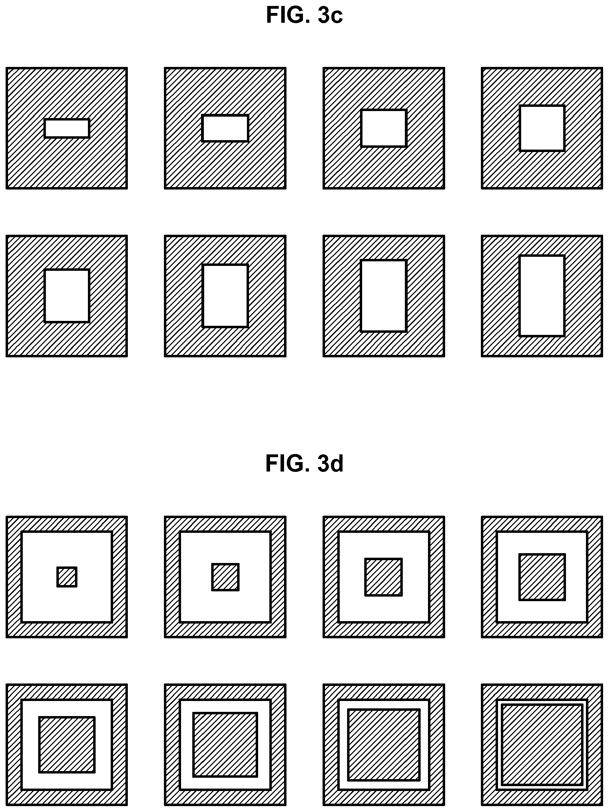

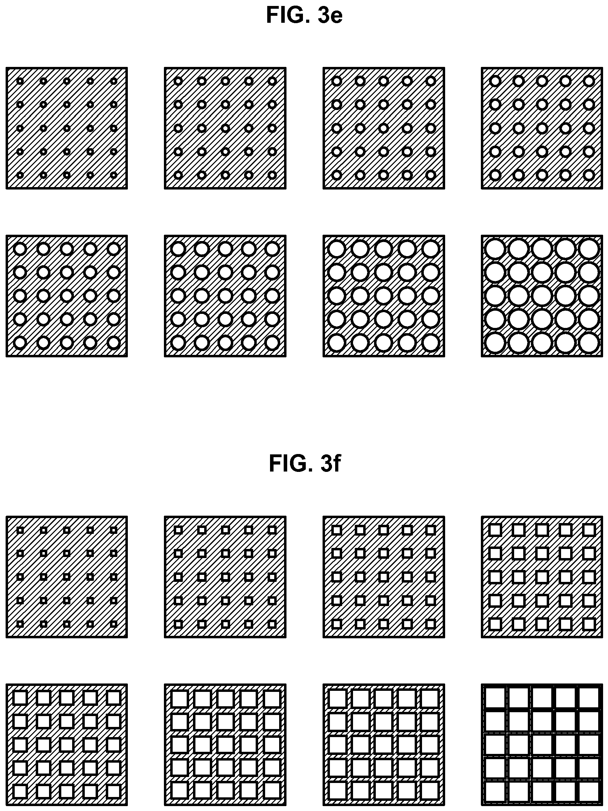

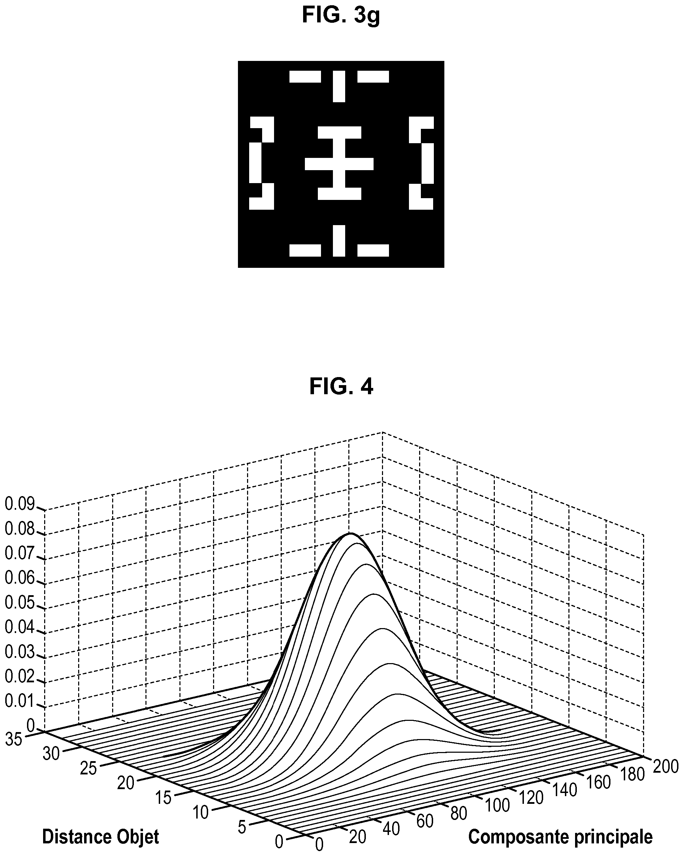

L'ouverture peut être de l'un des types décrits ci-après en référence à la figure 3 ou une combinaison de ceux-ci.

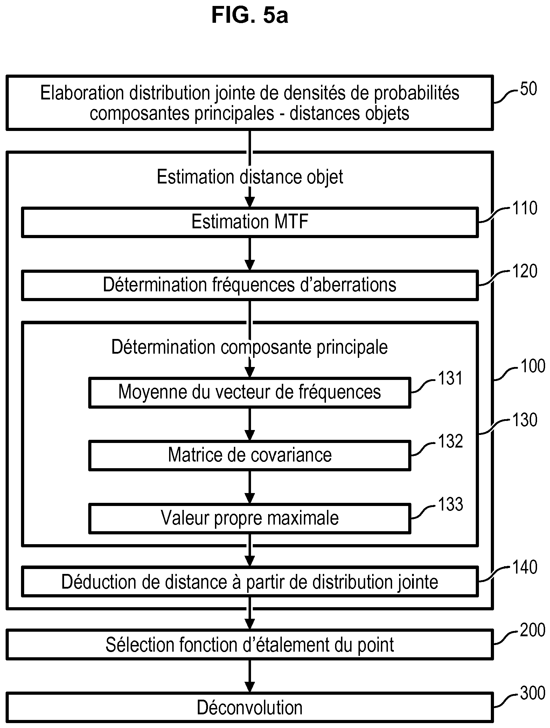

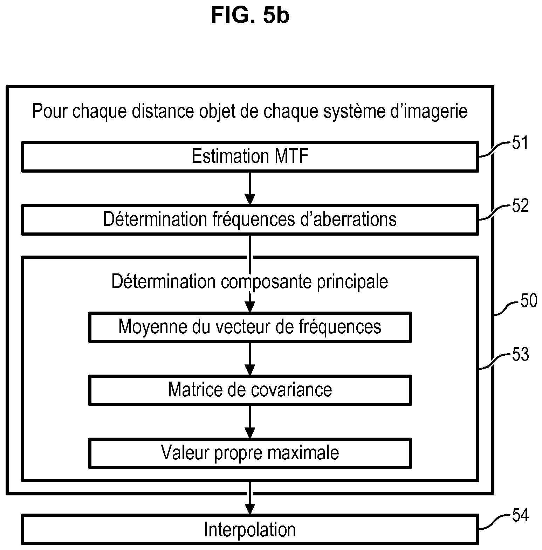

L'unité de traitement 11 est adaptée pour mettre en oeuvre le procédé décrit ci-après en référence à la figure 5, le cas échéant par un programme dont l'exécution permet la mise en oeuvre de ce procédé.

La relation entre un objet et son image formée par le système d'imagerie, s'écrit dans le domaine spectral comme suit :

$$\hat{I}_i(f_x, f_y) = \hat{I}_g(f_x, f_y) \cdot H(f_x, f_y)$$

Où $\hat{I}_i(f_x, f_y)$ est l'image de l'objet aux fréquences spatiales $(f_x, f_y)$ par le système d'imagerie, $\hat{I}_g(f_x, f_y)$ est l'image géométrique de l'objet par le système d'imagerie, et $H(f_x, f_y)$ est la fonction de transfert du système d'imagerie.

Par définition, la fonction de transfert de modulation (ou Modulation Transfer Function, ou MTF en anglais) est le module de la fonction de transfert H :

$$MTF(f_x, f_y) = |H(fx, fy)|$$

Cette fonction caractérise les propriétés spectrales d'un système optique. Sa valeur maximale est normalisée à 100% pour un système optique idéal, dépourvu de toute aberration. La valeur de la fonction de transfert de modulation, appelée dans la suite MTF, est inférieure à 100% si le système optique dégrade la qualité de l'image d'un objet.

La MTF d'un système d'imagerie peut être évaluée par exemple en positionnant une mire, comprenant une alternance de traits noirs et blancs à une fréquence spatiale variable, devant le système, et en évaluant l'image formée par le système de la mire.

On a représenté en figure 2 un exemple de MTF d'un système d'imagerie à une pluralité de distances différentes de l'objet par rapport au système. L'axe des abscisses représente la fréquence spatiale, en cycles/millimètres, de la mire testée. L'axe des ordonnées représente la valeur de la MTF normalisée (la MTF étant à un pour une fréquence spatiale nulle).

On a représenté en traits pleins la MTF d'un système d'imagerie sans aberration, et en traits pointillés, avec différents figurés, la MTF d'un système d'imagerie présentant des aberrations, pour différentes distances de l'objet par rapport au système.

On constate en premier lieu que la MTF varie en fonction de la distance de l'objet par rapport au système d'imagerie.

En outre, la MTF permet d'identifier des aberrations optiques du système, en particulier les points d'inversion de contrastes qui sont les points correspondants aux minimas de la MTF.

Ces points d'aberrations sont entourés sur la figure.

Or, les positions des points d'aberrations de la MTF varient en fonction de la distance de l'objet par rapport au système d'imagerie et en fonction de l'ouverture 12 positionnée en amont du capteur 10.

*Estimation de la distance d'un objet par rapport au système d'imagerie*

Le procédé décrit ci-après exploite cette propriété pour déterminer la distance d'un objet par rapport à un système d'imagerie.

En référence à la figure 5a, le procédé 100 de détermination de la distance par rapport au système d'imagerie 1, mis en oeuvre par l'unité de traitement 11 du système d'imagerie, ou le cas échéant par une unité de traitement séparée, comprend une première étape 110 d'estimation de la MTF, ou fonction de transfert de modulation, du système d'imagerie 1, à la distance où se trouve l'objet O.

Cette étape 110 comprend en premier lieu l'estimation de la fonction d'étalement du point du système à partir d'une image de l'objet O acquise par le système. Cette estimation est avantageusement réalisée en utilisant la méthode proposée dans l'article de N. Joshi et al, « PSF estimation using sharp edge prediction », IEEE Computer Society, Conference on Computer Vision and Pattern Recognition (CVPR 2008).

La fonction de transfert de modulation est ensuite calculée en calculant la transformée de Fourier de la fonction d'étalement du point estimée.

On obtient donc une courbe analogue à la courbe représentée en figure 2.

Le procédé comprend ensuite une étape 120 de détermination des fréquences $f_i$ d'aberrations de la MTF. Ces fréquences d'aberrations sont avantageusement les fréquences spatiales correspondant à des inversions de contraste du système d'imagerie. Ces aberrations sont identifiées sur la MTF comme étant les minimas de la MTF.

Par minima, on entend les points pour lesquels la dérivée de la MTF est nulle, et la dérivée seconde est positive.

De préférence, toutes les fréquences d'aberrations de la MTF sont relevées, mais le procédé fonctionne également si certaines fréquences d'aberrations sont omises.

Un vecteur X= $(f_1,...,f_n)$ est construit à partir des fréquences d'aberrations, en notant n le nombre des fréquences d'aberrations, n étant supérieur ou égal à 1.

Le procédé comprend ensuite une analyse 130 par composantes principales du vecteur X, pour déterminer la composante principale du vecteur X. Pour ce faire, une première sous-étape 131 comprend le calcul, par l'unité de traitement, de la moyenne $\overline{X}$ de X.

Au cours d'une deuxième sous-étape 132, l'unité de traitement calcule la matrice de covariance s du vecteur X : $s = (X - \overline{X})(X - \overline{X})^T$.

Enfin, au cours d'une troisième sous-étape 133, l'unité de traitement détermine la valeur propre λ la plus grande de la matrice de covariance s. Il s'agit de la composante principale de X.

Une fois la composante principale de X déterminée, l'unité de traitement exploite, au cours d'une étape 140, une distribution jointe de densités de probabilités, entre des composantes principales de vecteurs de fréquences d'aberration d'un ensemble de systèmes d'imagerie, et des distances objet-système (la distance entre un objet et l'un des systèmes de l'ensemble), pour déterminer la distance de l'objet par rapport au système d'imagerie 1.

La distance est choisie, à partir de la distribution, comme la distance maximisant cette distribution pour la composante principale obtenue.

Cette distribution est avantageusement mémorisée par l'unité de traitement 11, mais est de préférence obtenue selon le procédé décrit ci-après, en référence à la figure 5b.

*Elaboration de la distribution jointe*

L'élaboration de cette distribution est avantageusement une étape préliminaire 50 au procédé décrit ci-avant en référence à la figure 5a, qui peut être mise en oeuvre par une unité de traitement, éventuellement séparée du système d'imagerie (par exemple un processeur d'un ordinateur). La distribution ainsi obtenue peut être ensuite chargée dans l'unité de traitement 11 du système d'imagerie.

Cette distribution est établie en effectuant une analyse par composantes principales, conformément aux étapes 110 à 130 décrites ci-avant, de fonctions de modulation de transfert d'une pluralité de couples (système d'imagerie, distance objet-système), c'est-à-dire que chaque couple comprend un système d'imagerie et une distance de l'objet par rapport au système. L'analyse est donc mise en oeuvre pour au moins un système avec une pluralité de distances d'un objet par rapport au système, ou pour plusieurs systèmes, avec au moins une distance de l'objet par rapport à chaque système.

De préférence, le procédé comprend l'analyse par composantes principales des fréquences aberrantes des fonctions de transfert de modulation de plusieurs systèmes d'imagerie, chaque système comprenant une ouverture de géométrie et de dimension différentes. L'utilisation de ces multiples géométries d'ouvertures fait varier la profondeur de champ du système d'imagerie et ainsi sa MTF.

De plus, pour chaque système d'imagerie, l'analyse par composante principale est réalisée de préférence pour une pluralité de distances d'un objet par rapport au système.

A titre d'exemple, on a représenté sur la figure 3 différentes géométries d'ouverture, chaque géométrie d'ouverture comprenant des ouvertures de dimensions différentes.

Sur la figure 3a, l'ouverture peut être circulaire et centrée.

Alternativement, sur les figures 3b à 3g, l'ouverture peut être une ouverture codée, c'est-à-dire autre qu'une ouverture circulaire centrée. Par exemple, elle peut être circulaire et comprendre un masque annulaire (voir figure 3b).

Sur la figure 3c, l'ouverture peut être carrée ou rectangulaire, et comprendre éventuellement un masque carré ou rectangulaire (figure 3d).

Alternativement, l'ouverture peut être du type comprenant un masque périodique circulaire (figure 3e) ou carré (figure 3f).

Un autre exemple d'ouverture codée est représentée en figure 3g, avec un masque présentant une autre disposition de zones opaques et de zones transparentes.

D'autres géométries d'ouvertures peuvent également être adoptées, telles qu'une combinaison entre plusieurs géométries présentées ci-avant.

De retour à la figure 5b, pour chaque système d'imagerie, une première étape 51 comprend l'estimation de la MTF du système d'imagerie, à au moins une, et de préférence à une pluralité de distances d'un objet par rapport au système.

Une étape 52 comprend ensuite la détermination des fréquences d'aberrations $f^*_i$ de chaque MTF, et la construction d'un vecteur $X^* = (f^*_1,...,f^*_m)$ associé - m étant le nombre de fréquences d'aberrations, supérieur ou égal à 1, de chaque MTF.

A l'issue de l'étape 52, le nombre de vecteurs créés correspond donc au nombre de systèmes d'imagerie testés multiplié par le nombre de distances testées entre l'objet et chaque système.

Une étape 53 comprend ensuite l'analyse par composantes principales de chaque vecteur X*. Cette étape comprend les mêmes calculs que l'étape 300 décrite ci-avant, à savoir :

- Le calcul pour chaque vecteur X*, d'une moyenne $\overline{X^*}$,
- Le calcul, pour chaque vecteur X*, d'une matrice de covariance $s^* = (X^* - \overline{X^*})(X^* - \overline{X^*})^T$, et
- La détermination de la valeur propre la plus grande $\lambda^*$ de chaque matrice de covariance, cette valeur propre formant la composante principale.

A l'issue de l'étape 53, on obtient donc, pour chaque système d'imagerie, et chaque distance objet, la composante principale correspondante du système.

Enfin, la distribution de densités de probabilités jointe entre les composantes principales $\lambda^*$ et les distances entre les objets et les systèmes d'imagerie est réalisée au cours d'une étape 54 par interpolation (ajustement de courbe) entre les composantes principales et les distances.

En référence à la figure 4, la distribution obtenue est une distribution gaussienne. Cette distribution, du fait qu'elle soit obtenue par analyse par composantes principales, à partir d'une variété d'ouvertures géométriques, est commune à tout type de système d'imagerie, quelle que soit son ouverture géométrique.

Cette distribution permet donc ensuite de déterminer, de retour au système d'imagerie 1 et à la figure 5a, la distance de l'objet par rapport au système à partir de la composante principale $\lambda$ pour ce système et à cette distance de l'objet, quel que soit le système.

La détermination précise de la distance de l'objet par rapport au système d'imagerie permet ensuite, de retour à la figure 5a, de traiter l'image acquise par le système d'imagerie pour la rendre la plus nette possible.

En effet, l'unité de traitement 11 du système d'imagerie peut d'abord déterminer avec le procédé 100 la distance de l'objet par rapport au système puis, à partir de cette distance, sélectionner 200 une fonction d'étalement du point optimale pour cette distance.

Pour ce faire, l'unité de traitement 11 peut sélectionner, parmi une pluralité de fonctions d'étalement associées à des distances différentes de l'objet par rapport au système, celle qui correspond à la distance obtenue.

Une fois la fonction d'étalement du point sélectionnée, l'unité de traitement 11 peut déconvoluer 300 l'image obtenue avec cette fonction pour restaurer l'image de l'objet.

Une implémentation possible de ces étapes est décrite par exemple dans l'article de V. Dimri : « Deconvolution and Inverse Theory », Eslevier (octobre 1992).

On a ainsi proposé un procédé permettant d'améliorer la netteté des images acquises par un système d'imagerie numérique. De plus, ce procédé est de mise en oeuvre rapide, car la distribution de densités de probabilités jointe des composantes principales et des distances objet doit seulement être établie de façon préliminaire à l'utilisation effective d'un système d'imagerie. Il suffit ensuite de la charger dans le système et de l'exploiter pour déterminer la distance de l'objet par rapport au système.

Enfin, le procédé est applicable quelle que soit la géométrie de l'ouverture ou du diaphragme d'entrée du système.

## Revendications

1. Procédé (100) de détermination d'une distance entre un objet (O) et un système d'imagerie (1) comprenant un capteur d'images (10), une unité de traitement d'images (11), et une ouverture géométrique (12) positionnée en amont du capteur par rapport au trajet de la lumière, le procédé étant **caractérisé en ce qu'**il comprend les étapes consistant à :

   - estimer (110) la fonction de transfert de modulation du système d'imagerie à la distance de l'objet par rapport audit système (1),
   - déterminer (120) les fréquences d'aberrations de la fonction de transfert de modulation estimée, et générer un vecteur des fréquences d'aberration,
   - mettre en oeuvre (130) une analyse par composantes principales du vecteur, pour déterminer la composante principale du vecteur, et
   - à partir de la composante principale obtenue, déterminer (140) une distance de l'objet par rapport au système en fonction d'une distribution jointe de densités de probabilités entre des composantes principales de vecteurs de fréquences d'aberration de systèmes d'imagerie et des distances objet-système, ladite distribution étant obtenue par interpolation entre :

∘ des composantes principales de vecteurs de fréquences d'aberration de fonction de transfert de modulation d'un système d'imagerie comprenant une ouverture géométrique pour une pluralité de distances de l'objet par rapport audit système, et

∘ chaque distance entre l'objet et le système.

**2.** Procédé (100) de détermination selon la revendication 1, comprenant en outre une étape préliminaire (50) d'élaboration de la distribution jointe de densités de probabilités, comprenant les étapes consistant à :

- pour une pluralité de couples comprenant un système d'imagerie comprenant une ouverture géométrique et une distance d'un objet par rapport au dit système, estimer (51) la fonction de transfert de modulation du système d'imagerie à la distance de l'objet,
- pour chaque fonction de transfert de modulation estimée pour chacun des couples, déterminer (52) les fréquences d'aberrations du système à la distance de l'objet et générer un vecteur des fréquences d'aberration,
- mettre en oeuvre (53) une analyse par composantes principales de chaque vecteur des fréquences d'aberration, pour déterminer la composante principale de chaque vecteur, et
- élaborer (54) la distribution jointe par interpolation entre les composantes principales obtenues et chaque distance entre objet et système d'imagerie.

**3.** Procédé (100) selon la revendication 2, dans lequel l'étape préliminaire (50) d'élaboration de la distribution de densités de probabilités jointe comprend, pour au moins un système d'imagerie, l'estimation (51) d'une fonction de transfert de modulation du système à une pluralité de distances entre l'objet et le système.

**4.** Procédé (100) selon l'une des revendications 2 ou 3, dans lequel l'étape préliminaire (50) d'élaboration de la distribution de densités de probabilités jointe comprend l'estimation (51) de fonctions de transfert de modulation et la génération (52) de vecteurs de fréquences d'aberrations pour une pluralité de systèmes d'imageries comprenant des ouvertures géométriques différentes.

**5.** Procédé (100) selon la revendication 4, dans lequel l'étape préliminaire (50) d'élaboration de la distribution de densités de probabilités jointe comprend l'estimation (51) de fonctions de transfert de modulation pour des systèmes d'imageries comprenant une ouverture circulaire centrée ou une ouverture codée du type choisi parmi le groupe suivant, et/ou des combinaisons de celles-ci :

- une ouverture carrée,
- une ouverture comprenant un masque annulaire,
- une ouverture comprenant un masque carré,
- une ouverture comprenant un masque périodique.

**6.** Procédé (100) selon l'une des revendications précédentes, dans laquelle la distribution de densité de probabilité jointe est une distribution gaussienne.

**7.** Procédé (100) selon l'une des revendications précédentes, dans lequel chaque étape de détermination (120, 52) des fréquences d'aberrations d'une fonction de transfert de modulation comprend la détermination des fréquences d'inversion de contraste du système d'imagerie.

**8.** Procédé (100) selon la revendication 7, dans lequel chaque étape de détermination (120, 52) des fréquences d'aberrations d'une fonction de transfert de modulation comprend la détermination des minimas de la fonction.

**9.** Procédé de traitement d'une image d'un objet acquise par un système d'imagerie (1) comprenant un capteur d'images (10), une unité de traitement d'images (11) et une ouverture géométrique (12), le procédé comprenant :

- l'estimation (100) d'une distance de l'objet par rapport au système d'imagerie par la mise en oeuvre du procédé selon l'une quelconque des revendications précédentes,
- à partir de la distance de l'objet, la sélection (200) d'une fonction d'étalement du point du système d'imagerie, et
- la déconvolution (300) d'une image acquise de l'objet par la fonction d'étalement du système d'imagerie obtenue.

**10.** Système d'imagerie (1) comprenant un capteur d'images (10), une unité de traitement d'images (11) et une ouverture géométrique (12), **caractérisé en ce que** l'unité de traitement est adaptée pour la mise en oeuvre du procédé selon la revendication 9.

**11.** Produit programme d'ordinateur comprenant des instructions de code pour la mise en oeuvre du procédé de traitement selon la revendication 9 lorsqu'il est mis en oeuvre par des moyens de traitement d'une unité de traitement.

**Patentansprüche**

1.  Verfahren (100) zum Bestimmen einer Entfernung zwischen einem Objekt (O) und einem Bildgebungssystem (1), das einen Bildsensor (10), eine Bildverarbeitungseinheit (11) und eine geometrische Apertur (12), die stromaufwärts des Sensors in Bezug zu dem Verlauf des Lichts positioniert ist, umfasst, wobei das Verfahren **dadurch gekennzeichnet ist, dass** es die folgenden Schritte umfasst:

    - Schätzen (110) der Modulationsübertragungsfunktion des Bildgebungssystems zu der Entfernung des Objekts in Bezug zu dem System (1),
    - Bestimmen (120) der Aberrationsfrequenzen von der geschätzten Modulationsübertragungsfunktion und Erzeugen eines Vektors der Aberrationsfrequenzen,
    - Umsetzen (130) einer Analyse nach Hauptkomponenten des Vektors, um die Hauptkomponente des Vektors zu bestimmen, und
    - ausgehend von der erhaltenen Hauptkomponente, Bestimmen (140) einer Entfernung des Objekts in Bezug zu dem System in Abhängigkeit von einer gemeinsamen Verteilung von Wahrscheinlichkeitsdichten zwischen den Hauptkomponenten von Vektoren von Aberrationsfrequenzen von Bildgebungssystemen und Entfernungen Objekt-System, wobei die Verteilung erhalten wird durch Interpolation zwischen:

        ◦ Hauptkomponenten von Vektoren von Aberrationsfrequenzen von Modulationsübertragungsfunktion eines Bildgebungssystems, das eine geometrische Apertur für eine Vielzahl von Entfernungen des Objekts in Bezug zu dem System umfasst, und
        ◦ jeder Entfernung zwischen dem Objekt und dem System.

2.  Bestimmungsverfahren (100) nach Anspruch 1, das außerdem einen vorausgehenden Schritt (50) der Erstellung der gemeinsamen Verteilung von Wahrscheinlichkeitsdichten umfasst, das die folgenden Schritte umfasst:

    - für eine Vielzahl von Paaren, die ein Bildgebungssystem umfassen, das eine geometrische Apertur und eine Entfernung eines Objekts in Bezug zu dem System umfasst, Schätzen (51) der Modulationsübertragungsfunktion des Bildgebungssystems zu der Entfernung des Objekts,
    - für jede Modulationsübertragungsfunktion, die für jedes der Paare geschätzt wird, Bestimmen (52) von Aberrationsfrequenzen des Systems zu der Entfernung des Objekts und Erzeugen eines Vektors der Aberrationsfrequenzen,

    - Umsetzen (53) einer Analyse nach Hauptkomponenten jedes Vektors der Aberrationsfrequenzen, um die Hauptkomponente jedes Vektors zu bestimmen, und
    - Erstellen (54) der gemeinsamen Verteilung durch Interpolation zwischen den erhaltenen Hauptkomponenten und jeder Entfernung zwischen Objekt und Bildgebungssystem.

3.  Verfahren (100) nach Anspruch 2, wobei der vorausgehende Schritt (50) des Erstellens der gemeinsamen Verteilung von Wahrscheinlichkeitsdichten für mindestens ein Bildgebungssystem das Schätzen (51) einer Modulationsübertragungsfunktion des Systems zu einer Vielzahl von Entfernungen zwischen dem Objekt und dem System umfasst.

4.  Verfahren (100) nach einem der Ansprüche 2 oder 3, wobei der vorausgehende Schritt (50) des Erstellens der gemeinsamen Verteilung von Wahrscheinlichkeitsdichten das Schätzen (51) von Modulationsübertragungsfunktionen und das Erzeugen (52) von Vektoren von Aberrationsfrequenzen für eine Vielzahl von Bildgebungssystemen, die unterschiedliche geometrische Aperturen umfassen, umfasst.

5.  Verfahren (100) nach Anspruch 4, wobei der vorausgehende Schritt (50) des Erstellens der gemeinsamen Verteilung von Wahrscheinlichkeitsdichten das Schätzen (51) von Modulationsübertragungsfunktionen für Bildgebungssysteme umfasst, die eine zentrierte kreisförmige Apertur oder eine codierte Apertur des Typs umfassen, der aus der folgenden Gruppe ausgewählt ist und/oder Kombinationen dieser umfasst:

    - eine quadratische Apertur,
    - eine Apertur, die eine ringförmige Maske umfasst,
    - eine Apertur, die eine quadratische Maske umfasst,
    - eine Apertur, die eine periodische Maske umfasst.

6.  Verfahren (100) nach einem der vorhergehenden Ansprüche, wobei die gemeinsame Verteilung von Wahrscheinlichkeitsdichten eine Gaußsche Verteilung ist.

7.  Verfahren (100) nach einem der vorhergehenden Ansprüche, wobei jeder Schritt des Bestimmens (120, 52) der Aberrationsfrequenzen einer Modulationsübertragungsfunktion das Bestimmen der Kontrastumkehrfrequenzen des Bildgebungssystems umfasst.

8.  Verfahren (100) nach Anspruch 7, wobei jeder Bestimmungsschritt (120, 52) der Aberrationsfrequenzen einer Modulationsübertragungsfunktion das Bestimmen der Minima der Funktion umfasst.

9. Verarbeitungsverfahren eines Bilds eines Objekts, das durch ein Bildgebungssystem (1) erfasst wird, das einen Bildsensor (10), eine Bildverarbeitungseinheit (11) und eine geometrische Apertur (12) umfasst, wobei das Verfahren Folgendes umfasst:

- das Schätzen (100) einer Entfernung des Objekts in Bezug zu dem Bildgebungssystem durch Umsetzen des Verfahrens nach einem der vorhergehenden Ansprüche,
- ausgehend von der Entfernung des Objekts, Auswahl (200) einer Verwaschungsfunktion des Punkts des Bildgebungssystems, und
- die Dekonvolution (300) eines erfassten Bilds des Objekts durch die erhaltene Verwaschungsfunktion des Bildgebungssystems.

10. Bildgebungssystem (1), das einen Bildsensor (10), eine Bildverarbeitungseinheit (11) und eine geometrische Apertur (12) umfasst, **dadurch gekennzeichnet, dass** die Verarbeitungseinheit zur Umsetzung des Verfahrens nach Anspruch 9 angepasst ist.

11. Computerprogrammprodukt, das Codeanweisungen für die Umsetzung des Bearbeitungsverfahrens nach Anspruch 9 umfasst, wenn es von Verarbeitungsmitteln einer Verarbeitungseinheit umgesetzt wird.

**Claims**

1. Method (100) for determining a distance between an object (O) and an imaging system (1) comprising an image sensor (10), a unit for processing images (11), and a geometrical aperture (12) positioned upstream of the sensor with respect to the path of the light, with the method **characterised in that** it comprises the steps consisting in:

- estimating (110) the modulation transfer function of the imaging system at the distance of the object with respect to said system (1),
- determining (120) the aberration frequencies of the estimated modulation transfer function, and generating an aberration frequency vector,
- implementing (130) a principal component analysis of the vector, in order to determine the principal component of the vector, and
- using the principal component obtained, determining (140) a distance of the object with respect to system according to a joint distribution of the probability densities between principal components of aberration frequency vectors of imaging systems and of the object-system distances, said distribution being obtained by interpolation between:

○ principal components of aberration frequency vectors of the modulation transfer function of an imaging system comprising a geometric aperture for a plurality of distances of the object with respect to said system, and
○ each distance between the object and the system.

2. Method (100) for determining according to claim 1, further comprising a preliminary step (50) of elaborating the joint distribution of the probability densities, comprising the steps of:

- for a plurality of pairs comprising

○ an imaging system comprising a geometric aperture and
○ a distance of an object with respect to said system,

estimating (51) the modulation transfer function of the imaging system at the distance of the object,
- for each modulation transfer function estimated for each of the pairs, determining (52) the aberration frequencies of the system at the distance of the object and generating an aberration frequency vector,
- implementing (53) an principal component analysis of each aberration frequency vector, in order to determine the principal component of each vector, and
- elaborating (54) the joint distribution via interpolation between the obtained principal components and each distance between object and imaging system.

3. Method (100) according to claim 2, wherein the preliminary step (50) of elaborating the joint distribution of probability densities comprises, for at least one imaging system, estimating (51) a modulation transfer function of the system at a plurality of distances between the object and the system.

4. Method (100) according to one of claims 2 or 3, wherein the preliminary step (50) of elaborating the joint distribution of probability densities comprises estimating (51) modulation transfer functions and the generating (52) of aberration frequency vectors for a plurality of imaging systems comprising different geometric apertures.

5. Method (100) according to claim 4, wherein the preliminary step (50) of elaborating the joint distribution of probability densities comprises estimating (51) modulation transfer functions for imaging systems comprising a centred circular aperture or a coded aperture of the type chosen from among the following group, and/or combinations of these:

- a square aperture,
- an aperture comprising an annular mask,
- an aperture comprising a square mask,
- an aperture comprising a periodic mask.

6. Method (100) according to one of the preceding claims, wherein the joint distribution of probability density is a Gaussian distribution.

7. Method (100) according to one of the preceding claims, wherein each step of determining (120, 52) aberration frequencies of a modulation transfer function comprises determining contrast inversion frequencies of the imaging system.

8. Method (100) according to claim 7, wherein each step of determining (120, 52) aberration frequencies of a modulation transfer function comprises determining the minima of the function.

9. Method for processing an image of an object acquired by an imaging system (1) comprising an image sensor (10), a unit for processing images (11) and a geometric aperture (12), with the method comprising:

- estimating (100) a distance of the object with respect to the imaging system by implementing the method as claimed in any of the preceding claims,
- using the distance of the object, selecting (200) a point spread function of the imaging system, and
- deconvoluting (300) an acquired image of the object by the obtained spread function of the imaging system.

10. Imaging system (1) comprising an image sensor (10), a unit for processing images (11) and a geometric aperture (12), **characterised in that** the processing unit is adapted for implementing the method according to claim 9.

11. Computer programme product comprising code instructions for implementing the method of processing according to claim 9 when it is implemented by processing means of a processing unit.

# FIG. 1

# FIG. 2

EP 2 980 529 B1

# FIG. 3a

# FIG. 3b

12

# FIG. 3c

# FIG. 3d

## FIG. 3e

## FIG. 3f

## FIG. 3g

## FIG. 4

# FIG. 5a

```
┌─────────────────────────────────────────────────────────┐
│ Elaboration distribution jointe de densités de probabilités │──50
│      composantes principales - distances objets            │
└─────────────────────────────────────────────────────────┘
                          │
┌─────────────────────────────────────────────────────────┐
│              Estimation distance objet                     │
│                          │                                 │
│  ┌─────────────────────────────────────────────┐         │──110
│  │              Estimation MTF                   │         │
│  └─────────────────────────────────────────────┘         │
│                          │                                 │
│  ┌─────────────────────────────────────────────┐         │──120
│  │      Détermination fréquences d'aberrations   │         │
│  └─────────────────────────────────────────────┘         │
│                          │                                 │──100
│  ┌─────────────────────────────────────────────┐         │
│  │        Détermination composante principale    │         │──130
│  │                      │                         │         │
│  │  ┌──────────────────────────────────────┐    │         │
│  │  │    Moyenne du vecteur de fréquences   │────│131      │
│  │  └──────────────────────────────────────┘    │         │
│  │                      │                         │         │
│  │  ┌──────────────────────────────────────┐    │         │
│  │  │         Matrice de covariance         │────│132      │
│  │  └──────────────────────────────────────┘    │         │
│  │                      │                         │         │
│  │  ┌──────────────────────────────────────┐    │         │
│  │  │        Valeur propre maximale         │────│133      │
│  │  └──────────────────────────────────────┘    │         │
│  └─────────────────────────────────────────────┘         │
│                          │                                 │──140
│  ┌─────────────────────────────────────────────┐         │
│  │  Déduction de distance à partir de distribution jointe │
│  └─────────────────────────────────────────────┘         │
└─────────────────────────────────────────────────────────┘
                          │
┌─────────────────────────────────────────────────────────┐
│          Sélection fonction d'étalement du point          │──200
└─────────────────────────────────────────────────────────┘
                          │
┌─────────────────────────────────────────────────────────┐
│                    Déconvolution                          │──300
└─────────────────────────────────────────────────────────┘
```

# FIG. 5b

Pour chaque distance objet de chaque système d'imagerie

| Estimation MTF | —51 |

↓

| Détermination fréquences d'aberrations | —52 |

Détermination composante principale —50

| Moyenne du vecteur de fréquences |

↓

| Matrice de covariance | —53 |

↓

| Valeur propre maximale |

↓

| Interpolation | —54 |

## RÉFÉRENCES CITÉES DANS LA DESCRIPTION

**Littérature non-brevet citée dans la description**

- **A. LEVIN et al.** *Image and Depth from a Conventional Camera with a Coded aperture*
- PSF estimation using sharp edge prediction. **N. JOSHI et al.** Conference on Computer Vision and Pattern Recognition. IEEE Computer Society, 2008

- **V. DIMRI.** Deconvolution and Inverse Theory. Eslevier, Octobre 1992